(19) Europäisches Patentamt
European Patent Office
Office européen des brevets

(11) EP 0 678 959 B1

(12) **EUROPEAN PATENT SPECIFICATION**

(45) Date of publication and mention
of the grant of the patent:
**16.06.1999 Bulletin 1999/24**

(51) Int Cl.⁶: **H02G 15/18**

(21) Application number: **95105806.4**

(22) Date of filing: **19.04.1995**

(54) **Connecting portion covering member**

Umhüllung für eine Verbindung

Enveloppe pour connexion

(84) Designated Contracting States:
**DE FR GB IT**

(30) Priority: **21.04.1994 JP 8294994**

(43) Date of publication of application:
**25.10.1995 Bulletin 1995/43**

(73) Proprietor: **MINNESOTA MINING AND MANUFACTURING COMPANY**
**Saint Paul Minnesota 55144-1000 (US)**

(72) Inventors:
• **Nakamura, Tsunehisa,**
**c/o Sumitomo 3M Co., Ltd.**
**Sagamihara-shi, Kanagawa 228 (JP)**
• **Kobayashi, Hiroyuki, c/o Sumitomo 3M Co., Ltd.**
**Sagamihara-shi, Kanagawa 228 (JP)**
• **Tanaka, Kiyotaka, c/o Sumitomo 3M Co., Ltd.**
**Sagamihara-shi, Kanagawa 228 (JP)**

(74) Representative:
**Hilleringmann, Jochen, Dipl.-Ing. et al**
**Patentanwälte**
**von Kreisler-Selting-Werner,**
**Bahnhofsvorplatz 1 (Deichmannhaus)**
**50667 Köln (DE)**

(56) References cited:
**EP-A- 0 379 056**      **EP-A- 0 393 495**
**EP-A- 0 422 567**      **EP-A- 0 424 090**
**WO-A-91/18045**      **DE-U- 9 002 070**
**US-A- 3 502 790**      **US-A- 3 816 640**

• **PROGRESS IN POLYMER SCIENCE JAPAN by M.Imoto, Kansai University, Suita, Japan et al., Volume 1, 1971, p.391, Halsted Press Book: KODANSHA LTD., Tokyo**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a connecting portion covering member to be applied to a connecting portion of electric wires to be used in a cold region or a connecting portion of branched electric wires having irregular surfaces. The connecting portion covering member is used to perform waterproofing treatment, electrical insulating treatment, and mechanical protecting treatment on the connecting portion.

As a method for electrically insulating and waterproofing an electric wires connected portion, a method using a waterproof tape, a method using a mastic material and a waterproof tape, a method using a thermal contraction tube, and a method using a tube-shaped structure called PST and so on are known. The mastic material means a viscoelastic material, easily deformable, such as butyl rubber, caulking material or the like to cover the electrical wires. The PST which is an abbreviation of a Pre-Stretched Tube means an annular member which is expanded beforehand in the radial direction of the tube and contracts in the radial direction of the tube when the expanded state is removed.

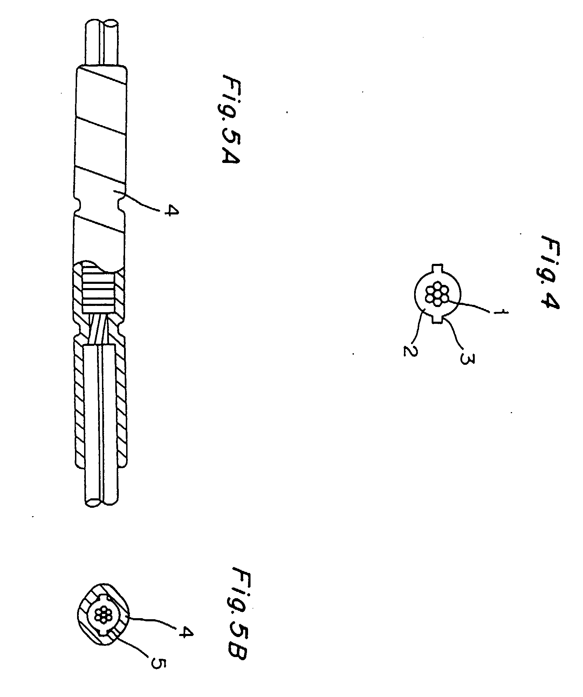

As shown in Fig. 5, the method of insulating a portion at which two electric wires have been connected with each other by a waterproof tape 4 has a problem that winding manners are different from each other depending on an operator and hence the connecting portions are not allowed to have uniform outer configurations. In a region where snow falls in winter, in order to prevent electric wires from being broken by snow which has lain thereon, an electric wire as shown in Fig. 4, having projections 3 extending in the diametrical direction of a covering material 2 of a conductor 1 from the peripheral surface thereof is used.

In the following, the electric wire of Fig. 4 is referred to "SN-OC" electric wire, which is the acronym for S̲now O̲ut-door C̲ross-linked polyethylene insulated wire defining an overhead insulating wire with a construction for preventing snow from coating it.

In the case in which the waterproof tape 4 is wound round the connecting portion of the SN-OC electric wires, water penetrates into a gap 5 formed between the projections 3 and the peripheral surface of the covering material 2 due to the provision of the waterproof tape 4, and hence a sufficient waterproofness cannot be obtained. Consequently, this method has a disadvantage that a favorable electrical insulation characteristic cannot be obtained.

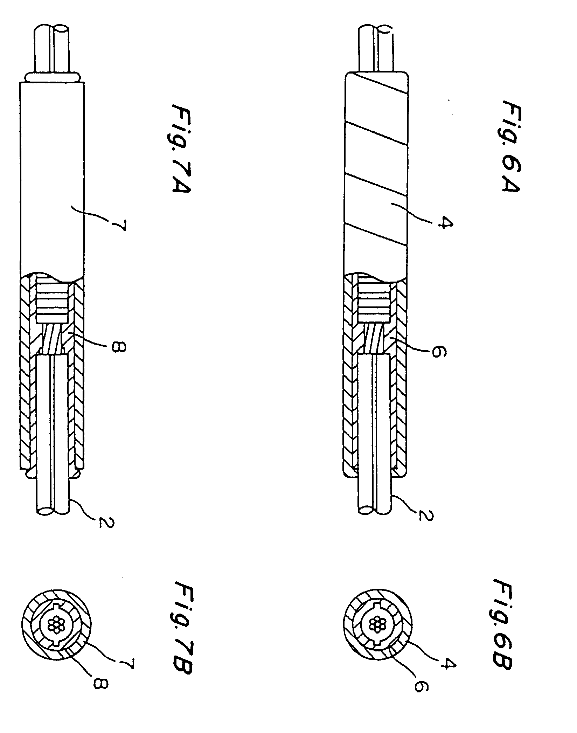

As shown in Fig. 6, in the method of insulating the connecting portion with a mastic material 6 and the waterproof tape 4, the above-described gap formed around the projections 3 can be filled with the mastic material 6. Thus, this method has a higher waterproofness than the method in which only the waterproof tape 4 is used. This method has, however, a problem that winding manners are different from each other depending on an operator and hence the outer configurations of the connecting portions are nonuniform and also a problem that the mastic material 6 is flowable and thus it is difficult to control the thickness thereof and moreover, the mastic material 6 flows outside from the end of the connecting portion. Further, this method has a problem that it takes several minutes to several hours at the room temperature for the mastic material 6 to be deformed due to the characteristic of a high polymer material. That is, it takes a long time for the mastic material 6 to be brought into contact with the outer configuration of the SN-OC electric wire. In addition, the mastic material 6 has also a problem that it has a low heat-resisting property.

In the method of insulating the connecting portion with a thermal contraction tube 7 as disclosed in JP-A-1-295614 and as shown in Fig. 7, operation can be carried out easily by the thermal contraction tube 7, and the outer configurations of connecting portions are allowed to be uniform because the gap 5 formed around the projection 3 is filled with a sealant 8 in melting the sealant 8 disposed in the inner side of the thermal contraction tube 7 by heat, and thus this method provides a favorable waterproofness and electrical insulation characteristic. But this method has a problem that a heat source such as a burner is required to contract the thermal contraction tube 7 and also a problem that the degrees of thermal contractions thereof are nonuniform depending on operators.

In the method of insulating the connecting portion with a PST 9, as shown in Fig. 8, disclosed in JP-B-49-46190, insulating operation can be performed more easily than the method in which the waterproof tape 4 is used and the method in which the thermal contraction tube 7 is used, and connecting portions are allowed to have uniform outer configurations. The gap 5 formed around the projections 3 cannot, however, be filled only by the elasticity of rubber contained in the PST 9 comprising the one-layer PST or two-layer PST having 45 degrees in rubber hardness. Thus, water penetrates into the gap 5 and hence, a sufficient waterproofness cannot be obtained. Consequently, this method has a problem in electrical insulation characteristic.

In the method of insulating the connecting portion by means of a structure, comprising the mastic material 6 formed in the inner side of the PST 9, disclosed in JP-A-3-143217 and as shown in Fig. 9, the gap 5 is filled with the mastic material 6 and the mastic material 6 is covered with the PST 9. Thus, insulating operation can be performed easily and in addition, connecting portions are allowed to have uniform outer configurations and thus a favorable waterproofness and electrical insulation characteristic can be obtained. This method has, however, a problem that the mastic material 6 provided on the surface of the core material constituting the PST adheres to the core material and thus, operation of separating the mastic material 6 from the core material is required. This method has also a problem that because the mastic material 6 is used, as described above, the mastic material 6 is apt to flow outside from the end of the connecting portion.

From DE-U-90 02 070 defining the preamble of claim 1, a connecting portion covering member with an annular member made of elastomer and a core member for holding the annular member in a state, in which the annular member is expanded in a radial direction thereof, is known. Objects to be connected with each other can be inserted into the core member, so that, upon removing the core member from the annular member, the latter covers the connection portion of the objects to be connected. The annular member comprises a second elastic member disposed along an outer surface of the core member, and a first elastic member disposed along an outer surface of the second elastic member and that of a core member. The second elastic member has a rubber hardness in the range of from 25 to 45 Shore-A-hardness.

In US-A-3,816,640 there is disclosed a cable splice assembly employed for joining a pair of shielded high voltage cables, which assembly is formed from a number of elastomeric, coaxial inner tubes and an elastomeric, semiconductive outer tube that is coaxial with the inner tubes. Semiconducting portions and high dielectric strength insulating portions form the inner tubes with the semiconducting portions of adjacent inner tubes interleaved to serve as extensions of the cable shielding. At least one of the shield extensions electrically contacts the semiconductive outer tube to extend the cable shielding over the splice region.

From WO-A-9118045 an elastomeric tubular member is known comprising a combination of two layers formed of ethylene propylene rubber having a Shore-A-hardness between 28 and 33.

By means of a core member, the elastic tubes can be held in a state in which they are expanded in a radial direction.

Accordingly, it is the object of the present invention to provide a connecting portion covering member superior inallowing a connecting portion of electric wires having an irregular outer configuration to have superior moisture proof, electrical insulating, and low-temperature characteristics.

According to the invention, this object is solved by means of a connecting portion covering member as defined in claim 1. The features of preferred embodiments of the invention are listed in the subclaims each.

In accomplishing these and other aspects, according to one aspect of the present invention, there is provided a connecting portion covering member comprising: an annular member made of elastomer and a core member holding the annular member in a state in which the annular member is expanded in a radial direction thereof, in which objects to be connected with each other are inserted into the core member to dispose the annular member on a connecting portion of the objects to be connected with each other, and the core member is removed from the annular member so that the annular member covers the connecting portion, the annular member comprising: a second elastic member formed of silicone rubber disposed along an outer surface of the core member; and a first elastic member formed of silicone rubber disposed along an outer surface of the second elastic member and that of the core member, wherein the second elastic member has a rubber hardness in a range of from 10 to 20 in JIS (Japanese Industrial Standard) A-standard and wherein the first elastic member has a value of tensile stress in a range from 196,2 to 588.6 N/cm$^2$ (20 to 60 Kfg/cm$^2$) at a 300 % tensile strain.

By the above construction of the present invention, the first and second elastic members closely adhere to the outer surface of objects to be connected with each other even though the outer surfaces thereof are irregular. Thus, the connecting portion covering member operates to allow the connecting portion to have a superior moisture proof characteristic, electrical insulating characteristic, and low-temperature characteristic.

These and other aspects and features of the present invention will become clear from the following description taken in conjunction with the preferred embodiments thereof with reference to the accompanying drawings, in which:

Fig. 1 is a half-sectional view showing the construction of a connecting portion covering member according to the present invention;

Fig. 2A and Fig. 2B are sectional views, taken along a direction of the longitudinal axis of the connecting portion covering member and a direction perpendicular to the axis, showing a state in which the connecting portion covering member of Fig. 1 has been mounted on SN-OC electric wires;

Fig. 3 is a view including a partial sectional view showing the connecting portion covering member of Fig. 1 has been mounted on both ends of a pipe;

Fig. 4 is a vertical sectional view showing an SN-OC electric wire;

Fig. 5A and Fig. 5B are sectional views, taken along a direction of the longitudinal axis of the SN-OC electric wires and a direction perpendicular to the axis, showing a state in which SN-OC electric wires have been connected with each other by means of a waterproof tape;

Fig. 6A and Fig. 6B are sectional views, taken along a direction of the, longitudinal axis of the SN-OC electric wires and a direction perpendicular to the axis, showing a state in which SN-OC electric wires have been connected with each other by means of a mastic material and a waterproof tape;

Fig. 7A and Fig. 7B are sectional views, taken along a direction of the longitudinal axis of the SN-OC electric wires and a direction perpendicular to the axis, showing a state in which SN-OC electric wires have been connected with each other by means of sealant and thermal contraction tube;

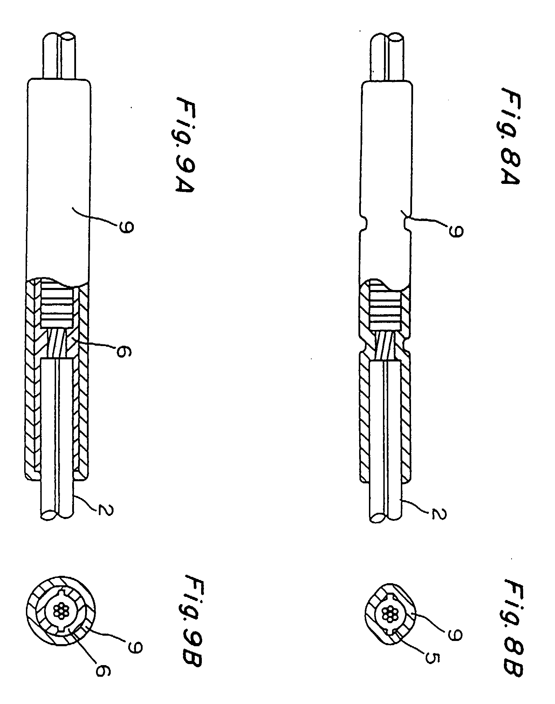

Fig. 8A and Fig. 8B are sectional views, taken along a direction of the longitudinal axis of the SN-OC electric wires and a direction perpendicular to the axis, showing a state in which SN-OC electric wires have been connected with each other by means of a conventional PST; and

Fig. 9A and Fig. 9B are sectional views, taken along a direction of the longitudinal axis of the SN-OC electric wires and a direction perpendicular to the axis, showing a state in which SN-OC electric wires have been connected with each other by means of a mastic material and the conventional PST.

Before the description of the present invention proceeds, it is to be noted that like parts are designated by like reference numerals throughout the accompanying drawings.

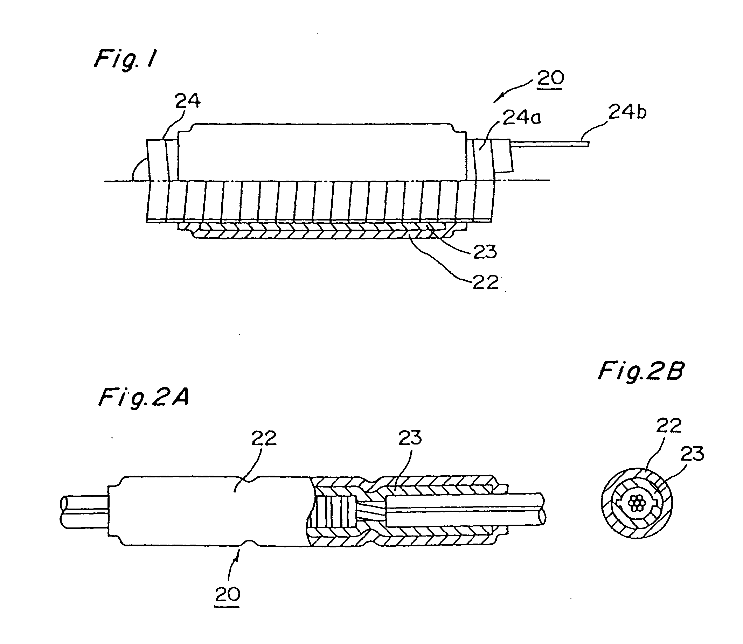

A connecting portion covering member according to an embodiment of the present invention is described below with reference to drawings. The connecting portion covering member according to the embodiment has a construction basically similar to that of an enclosure disclosed in the above-described JP-B-49-46190 and is constructed as shown in Fig. 1. That is, a connecting portion covering member 20 comprises an annular member including a first elastic member 22 and a second elastic member 23 wherein the first elastic element 22 is provided on the outer surface of the second elastic member 23; and a core member 24 provided in the inner side of the second elastic member 23 as well as the first elastic member 22 to hold the annular member expanded in the radial direction thereof. The first elastic member 22 and the second elastic member 23 are made of a PST. The provision of the PST is one of the features of the present invention. The connecting portion covering member is disposed in a connecting portion of electric wires, such as SN-OC electric wires, the outer surfaces of which are irregularly formed. When the core member 24 is removed from the connecting portion covering member 20, the first elastic member 22 and the second elastic member 23 contract in the radial direction thereof, thus covering the connecting portion. Each of the above-described constituting members is described below. It is to be noted that "cylindrical configuration" described in the specification is not limited to an object having a circular configuration in section but includes a hollow long and narrow configuration in section. It is also to be noted that "connecting portion" is a concept including not only a portion in which two electric wires are connected with each other, but also a portion at which a plurality of electric wires is connected with each other and in addition, a portion of branched electric wires.

The first elastic member 22 is formed to be substantially cylindrical and contracts radially when the core member 24 is removed from the connecting portion covering member 20, thus protecting the connecting portion so as to perform waterproof operation, electrical insulating operation, and mechanical protecting operation. Elastomer is preferable as a material of the first elastic member 22 because the material is required to have a preferable property as the PST and display moisture proof operation and so on in a low-temperature environment in which the SN-OC electric wires are used. As the material of the first elastic member 22, silicone rubber is used. Silicone rubber is used because (1) it can be used without its characteristic being deteriorated in a wide temperature range from -60°C to +150°C, (2) it is superior in weather resistance, as proved in a test conducted in sunshine by using a weather meter that it can be used for more than 5,000 hours at 63°C in black panel temperature even though carbon black is not added to silicone rubber, (3) it has a high repellency and hence tracking phenomenon occurs in a small degree, (4) it is excellent in electrical insulating property, and (5) it is superior in separation property and thus it is unnecessary to separate it from the core member, which facilitates the removal of the core member from the connecting portion covering member 20. It is possible to add plasticizer, oil, carbon black, ultraviolet ray-absorbing agent, antioxidant or the like to the material of the first elastic member 22. It is preferable to introduce a chemical or physical bridge structure to the material of the first elastic member 22 to improve its creep-resistant property, mechanical strength, elasticity, and heat resistance.

The first elastic member 22 has a value of tensile stress in a range from 196.2 to 588.6 N/cm$^2$ (20 to 60 Kgf/cm$^2$) at a 300% tensile strain (modulus at 300%) in the standard of JIS K-6301. If the tensile stress value at 300% tensile strain for the first elastic member 22 is less than 98.1 N/cm$^2$ (10Kgf/cm$^2$), force for clamping the electric wire to the connecting portion is insufficient, which causes the airtightness and waterproofness of the connecting portion to be inferior. If the tensile stress value at 300% tensile strain for the first elastic member 22 is more than 981 N/cm$^2$ (100Kgf/cm$^2$), a great force is required to expand the first elastic member 22 in the radial direction thereof with difficulty, and the first elastic member 22 is incapable of being deformed favorably in conformity to the outer configuration of an electric wire such as the SN-OC electric wire.

The favorable thickness of the first elastic member 22 ranges from 1mm to 15mm. If the thickness of the first elastic member 22 is less than 1mm, the electrical insulating property, waterproofness, and mechanical strength of the connecting portion are inferior. If the thickness of the first elastic member 22 is more than 15mm, a great force is required to expand the first elastic member 22 in the radial direction thereof with difficulty, and the first elastic member 22 is incapable of being deformed favorably in conformity to the outer configuration of electric wires such as the SN-OC electric wires. In order for the connecting portion to effectively obtain airtightness and waterproofness, favorably, the thickness of the first elastic member 22 is in the range from 2mm to 10mm, and more favorably, 3mm to 7mm.

Favorably, the material of the first elastic member 22 has a hardness ranging from 20 to 60 in A-standard of JIS (Japanese Industrial Standard), and more favorably, ranging from 30 to 50. The reason why the above range is favorable is because the material having a hardness less than 20 is too soft and hence, the airtightness and waterproofness of the connecting portion of electric wires are inferior. If its hardness is more than 60, the expansion of the material is unfavorable and thus it is difficult to expand the first elastic member 22 in the radial direction thereof with difficulty, and in addition, the first elastic member 22 is incapable of being deformed in conformity to the outer configuration of electric wires such as the SN-OC electric wires.

The second elastic member 23 is described below.

The second elastic member 23 is formed to be substantially cylindrical along the configuration of the inner surface of the first elastic member 22. The second elastic member 23 is deformed according to the outer configuration of the SN-OC electric wire when the core member 24 is removed from the connecting portion covering member 20. That is, the second elastic member 23 is used to protect the connecting portion and a connecting portion of branched electric wires in cooperation with the second elastic member 23 to allow the connecting portion covering member 20 to have a favorable moisture proof treatment, electrical insulation treatment, and mechanical protection treatment.

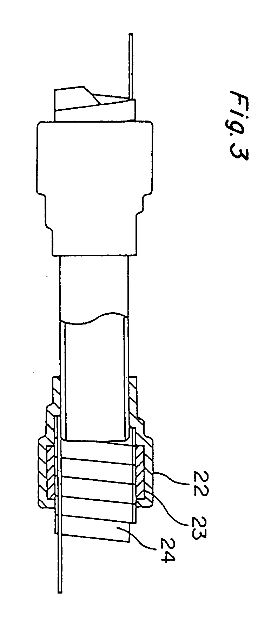

The second elastic member 23 may be provided in substantially the whole length of the first elastic member 22 along the axial direction thereof as shown in Fig. 1, but may be provided in one end of the first elastic member 22 in the axial direction of the first elastic member 22, as shown in Fig. 3.

It is preferable that the second elastic member 23 is made of the same material as that of the first elastic member 22, because the material of the second elastic member 23 made of the PST is required to have a favorable property and in addition, electrically insulate the connecting portion as described above. Silicone rubber is most suitable as well for the material of the second elastic member 23 because it has a preferable cold-resistant property.

The material of the second elastic member 23 has a hardness ranging from 10 to 20 in A-standard of JIS. If its hardness is less than 10, (1) the viscosity of the material is so high that the material is apt to adhere to the outer surface of the core member 24, (2) the material has a high flow property and is hence apt to flow out from the electric wire connecting member, (3) it takes long for the material to be brought into close contact with the SN-OC electric wire, the outer configuration of which is irregular, (4) the material has a low heat-resistant property. If the hardness of the second elastic member 23 is more than 20, it is not brought into close contact with the outer configuration of the SN-OC electric wire and thus, gaps are apt to be formed and as a result, a problem that air-tightness, waterproofness, and insulating property are unfavorable occurs. In this range of hardness, the balance between the adherence of the second elastic member 23 to the core member 24 and the airtightness thereof is preferable.

Preferably, the tensile stress of the second elastic member 23 is in the range from 9.81 to 490.5 N/cm$^2$ (1 to 50Kgf/cm$^2$) in modulus at 300% tensile strain in the standard of JIS K-6301. If the tensile stress of the second elastic member 23 is less than 9.81 N/cm$^2$ (1Kgf/cm$^2$), the second elastic member 23 has a very strong flow property and thus there is a possibility that the second elastic member 23 flows outside from the electric wire connecting member. If the tensile stress of the second elastic member 23 is more than 490.5 N/cm$^2$ (50Kgf/cm$^2$), it is not brought into close contact with the outer surface of the SN-OC electric wire which is irregular and thus, gaps are apt to be formed. More favorably, the tensile strength of the material of the second elastic member 23 is in the range from 29.43 to 196.2 N/cm$^2$ (3 to 20 Kgf/cm$^2$). In this range of values, airtightness, waterproofness, and electrical insulating property can be efficiently obtained.

The favorable thickness of the second elastic member 23 ranges from lmm to 10mm. Normally, the projection 3 of the SN-OC electric wire has a height lmm or more. Therefore, if the thickness of the second elastic member 23 is less than lmm, it is difficult for the second elastic member 23 to be brought into close contact with the outer surface of the SN-OC electric wire and thereby airtightness, waterproofness, and electrical insulating property cannot be efficiently obtained. On the other hand, if the thickness of the second elastic member 23 is more than 10mm, the entire connecting portion on which the electric wire-connecting member is provided is large and thus it is difficult to perform operations and protect a connecting portion of branched electric wires. In addition, it takes a long time to introduce a bridge structure to the material of the second elastic member 23 and thus the material is apt to have a nonuniform property. More favorably, the thickness of the second elastic member 23 ranges from 2mm to 8mm, and most favorably, ranges from 3mm to 7mm. In this range of values, airtightness, waterproofness, and electrical insulating property can be efficiently obtained, and further, the electric wire-connecting member can be manufactured easily.

The core member 24 is similar to the one disclosed in JP-B-49-46190 and has a cylindrical configuration formed by connecting narrow long band-shaped materials 24a spirally wound with each other. Thus, the core member 24 is destroyed by pulling one end 24b of the band-shaped material 24a. Compared with the outer diameter of the members to be connected with each other, the inner diameter of the core member 24 is so large as to form a sufficient gap in which the band-shaped materials 24a forming the core member 24 are rewound. Accordingly, the inner diameter of the core member 24 can be varied according to the outer diameter of the members to be connected with each other. A durable and flexible material such as acetic acid, butyric cellulose , polypropylene, polyethylene or polyvinyl chloride is used.

As an example of a method for manufacturing the electric wire connecting member, according to this embodiment, comprising the first elastic member 22, the second elastic member 23, and the core member 24, initially, the materials of the second elastic member 23, the first elastic member 22, and the core member 24 are formed into a predetermined configuration, respectively, and the first elastic member 22 and the second elastic member 23 are radially expanded to install them on the peripheral surface of the core member 24. When the peripheral surface of the second elastic member 23 is all covered with the first elastic member 22 as shown in Fig. 1 and the connecting portion covering member 20 assumes a form as shown in Fig. 1, the core member 24 is extended longer than the first elastic member 22 in the axial direction thereof. When the connecting portion covering member 20 assumes a form as shown in Fig. 3, the core member 24 is extended projectingly from one end of the first elastic member 22 in the axial direction thereof.

Experimental results shown in Table 1 through Table 4 indicate that preferably, the tensile stress of the first elastic member 22 is in the range of from 98.1 to 981 $N/cm^2$ (10 to 100Kgf/$cm^2$) at a 300% tensile strain and the rubber hardness of the second elastic member 23 in JIS A-standard is " 5 to 30".

The electric wire connecting member according to the above-described embodiment was used to cover an electric wire having an irregular outer surface as shown in Fig. 4, for example, the SN-OC electric wire. A PST tube is designed so that seal stress of the first elastic member 22 is more than 10%. The seal stress is expressed as follows:

$$\text{Seal stress} = [(\text{outer diameter of cable}$$

$$\text{cover-unexpanded inner diameter of elastic contraction}$$

$$\text{element})/\text{unexpanded inner diameter of elastic contraction}$$

$$\text{element}] \times 100.$$

In evaluating the first elastic member 22, as shown in Table 1, five kinds of silicon rubbers (I, III through V, and VII) mixed into PST and having 300% tensile strains different from each other, two kinds of ethylene propylene rubbers (VI and VIII), and one kind of silicon-denatured EPDM (II) are used, and the first elastic member 22 is formed by using a die. In evaluating the second elastic member 23, as shown in Table 2, five kinds of silicon rubbers (i through v) mixed into PST and having hardnesses different from each other, two kinds of ethylene propylene rubbers (vi and viii), and one kind of butyl rubber (vii) are used, and the second elastic member 23 is formed by using a die. A two-layer PST is formed in combination of the first elastic members 22 and the second elastic members 23 thus formed. The two-layer PST thus formed are applied to the SN-OC electric wires to compare the characteristics of silicone rubber with other rubbers to examine the waterproofness and insulating property of the rubbers, as shown in Table 3.

TABLE 1

| Item | Unit | Materials | | | | | | | |
|---|---|---|---|---|---|---|---|---|---|
| | | I | II | III | IV | V | VI | VII | VIII |
| Hardness (JIS A) | Hs | 30 | 40 | 45 | 45 | 50 | 45 | 15 | 70 |
| 300 % tensile strain | N/cm² (Kgf/cm²) | 196.2 (20) | 245.25 (25) | 294.3 (30) | 343.35 (35) | 294.3 (30) | 441.45 (45) | 78.48 (8) | 637.65 (65) |
| Tensile strain | N/cm² (Kgf/cm²) | 245.25 (25) | 392.4 (40) | 833.85 (85) | 833.85 (85) | 833.85 (85) | 686.7 (70) | 294.3 (30) | 882.9 (90) |
| Elongation | % | 850 | 800 | 900 | 700 | 650 | 600 | 850 | 400 |
| Tear strength (JIS trouser type) | N/cm² (Kgf/cm²) | 98.1 (10) | 98.1 (10) | 196.2 (20) | 176.58 (18) | 186.39 (19) | 196.2 (20) | 58.86 (6) | 196.2 (20) |
| Permanent elongation (aged 22 Hrs at 100°C) (aged 6 Hrs at -20°C) | | 13 10 | 14 14 | 5 6 | 5 5 | 5 5 | 10 50 | 10 10 | 20 60 |

Except tear strength, the characteristic values of materials are measured in accordance with JIS K6301.
Tear strength is measured in accordance with JIS K6252.

| | |
|---|---|
| I, III - V, VII: | silicone rubber |
| II: | silicon-denatured EPDM |
| VI, VIII: | ethylene propylene rubber |

**TABLE 2**

| Item | Unit | | | | Materials | | | | |
|---|---|---|---|---|---|---|---|---|---|
| | | i | ii | iii | iv | v | vi | vii | viii |
| Hardness (JIS A) | Hs | 29 | 25 | 20 | 15 | 13 | 13 | unmeasurable | 45 |
| 300 % tensile strain | N/cm² | 196.2 | 186.39 | 176.58 | 98.1 | 88.29 | 68.67 | <9.81 | 441.45 |
| | (Kgf/cm²) | (20) | (19) | (18) | (10) | (9) | (7) | (<1) | (45) |
| Tensile strain | N/cm² | 372.78 | 323.73 | 313.92 | 294.3 | 245.25 | 196.2 | <98.1 | 686.7 |
| | (Kgf/cm²) | (38) | (33) | (32) | (30) | (25) | (20) | (<10) | (70) |
| Elongation | % | 450 | 750 | 600 | 850 | 950 | 800 | >1000 | 500 |
| Tear strength (JIS trouser type) | N/cm² | 98.1 | 78.48 | 58.86 | 58.86 | 39.24 | 19.62 | unmeasurable | 117.72 |
| | (Kgf/cm²) | (10) | (8) | (6) | (6) | (4) | (2) | (unmeasurable) | (12) |
| Permanent elongation (aged 22 Hrs at 100°C) | | 8 | 9 | 10 | 10 | 13 | 13 | unmeasurable | 10 |
| (aged 6 Hrs at -20°C) | | 8 | 10 | 10 | 10 | 14 | 50 | unmeasurable | 50 |

Except tear strength, the characteristic values of materials are measured in accordance with JIS K6301.
Tear strength is measured in accordance with JIS K6252.

i - v:    silicone rubber
vi, viii:  ethylene propylene rubber
vii:      butyl rubber

TABLE 3 EVALUATED RESULT

| | First elastic member | | Second elastic member | | | Waterproof-ness *2 | Airtight-ness *3 |
|---|---|---|---|---|---|---|---|
| | Kind | Thick-ness (mm) | Kind | Thick-ness (mm) | Position | | |
| 1 | I | 2 | iv | 4 | all | GOOD | GOOD |
| 2 | I | 5 | iv | 4 | all | GOOD | GOOD |
| 3 | I | 7 | iv | 4 | all | GOOD | GOOD |
| 4 | I | 10 | iv | 5 | all | GOOD | GOOD |
| 5 | I | 12 | iv | 7 | all | GOOD | GOOD |
| 6 | II | 7 | i | 5 | all | GOOD | GOOD |
| 7 | III | 8 | ii | 5 | all | GOOD | GOOD |
| 8 | IV | 7 | iii | 5 | all | GOOD | GOOD |
| 9 | V | 8 | v | 6 | all | GOOD | GOOD |
| 10 | VI | 7 | vi | 4 | only edge | GOOD | GOOD |
| 11 | VI | 5 | iv | 4 | all | GOOD | GOOD |
| 12 | VII | 3 | vii | 4 | all | BAD | BAD |
| 13 | VIII | 18 | viii | 4 | all | BAD | BAD |
| 14 | VII | 0.5 | i | 0.5 | all | BAD | BAD |

EP 0 678 959 B1

−continued

| 15 | VIII | 0.5 | vii | 5 | all | BAD | BAD |
|----|------|-----|-----|---|-----|-----|-----|

*2: Insulating properties between conductors of electric wires and water are measured by DC1000V mega K, with connecting portions placed in water.

GOOD$\geq$2000M$\Omega$, FAIR$\geq$500M$\Omega$, BAD<500M$\Omega$

*3: Air pressure is applied from ends of electric wires to waterproofed connecting portions to measure pressures at which air leakages occur.

GOOD$\geq$9.81 N/cm$^2$, FAIR$\geq$0.981 N/cm$^2$, BAD<0.981 N/cm$^2$

The characteristic of the electric wire covering member 20 according to the above-described embodiment and that of the conventional PST are evaluated to examine the waterproofness, insulating property, and low-temperature contraction property of the two electric wire connecting members. Evaluated results are shown in Table 4. As apparent from Table 4, in waterproofness and insulating property, the electric wire covering member 20 according to the above-described embodiment is superior to the conventional method to be carried out by using a waterproof tape, and it is considered that the electric wire covering member 20 according to the above-described embodiment provides a characteristic similar to that of the conventional mastic material incorporated type PST. In low-temperature contraction property, it appear that the electric wire covering member 20 according to the above-described embodiment is superior to the conventional mastic material incorporated type PST.

TABLE 4        EVALUTATED RESULT

| Waterproofing method | Waterproof/insulation characteristics | Airtightness characteristic | Low-temperature contraction characteristic |
|---|---|---|---|
| Waterproof tape *4 | 0.1 MΩ or less | 0.981 N/cm² or less (0.1 Kgf/cm²) or less | ----- |
| Conventional silicon rubber PST *5 | 0.1 MΩ or less | 0.981 N/cm² or less (0.1 Kgf/cm²) or less | within 30 minutes |
| Mastic-incorporated PST *6 | not less than 2000 MΩ | not less than 9.81 N/cm² (not less than 1.0 Kgf/cm²) | not less than 96 hours |
| Connecting portion covering member according to embodiment *7 | not less than 2000 MΩ | not less than 9.81 N/cm² (not less than 1.0 Kgf/cm²) | within 30 minutes |

*4: Waterproof tapes are wound on connecting portions to insulate them.

*5: Conventional silicone rubber PST are mounted on connecting portions to insulate them.

*6: Butyl rubber mastic-incorporated PST are mounted on connecting portions to insulate them.

*7: Connecting portion covering members according to embodiment are mounted on connecting portions to insulate them.

The case in which the connecting portion covering member 20 is applied to a connecting portion of electric wires is described below.

In applying the connecting portion covering member 20 to the connecting portion of the SN-OC electric wires, the SN-OC electric wires are inserted into the hollow portion of the core member 24 of the connecting portion covering member 20, and the connecting portion covering member 20 is disposed on the connecting portion. Then, in pulling the band-shaped material 24a of core member 24 of the connecting portion covering member 20 therefrom, the first elastic member 22 superior in permanent-set characteristic contracts. The 300% tensile stress of the first elastic member 22 at a 300% tensile strain is more than 98.1 $N/cm^2$ ($10Kgf/cm^2$). At this time, the second elastic member 23 is pressed against the surface of the SN-OC electric wire at a seal stress more than 5%. As a result, the second elastic member 23 is easily deformed by the seal stress of the outer member because the second elastic member 23 is made of a bridged rubber layer having a low rubber hardness less than 30 degrees, thus performing an operation of filling the gap 5 generated between the second elastic member 23 and the outer surface of the SN-OC electric wire irregular due to the projection 3. Consequently, a sufficient waterproofness and electrical insulating property equal to those of a combination of the conventional electric wire and the conventional PST can be obtained in the SN-OC electric wire.

Further, a structure comprising a plastic pipe and the PST member according to the present invention installed on both ends of the plastic pipe as shown in Fig. 3 may be produced.

As described above, according to the electric wire covering member of the above-described embodiment, the second elastic member 23 made of the PST having a rubber hardness ranging from 10 to 20 degrees can be closely brought into contact with the outer surfaces of objects to be connected with each other even though outer surfaces of the materials are irregular. Thus, the connecting portion covering member 20 allowing the connecting portion to have a superior moisture proof characteristic, electrical insulating characteristic, and low-temperature characteristic can be provided. In addition, it is unnecessary to perform separation treatment on the core member 24 because the mastic material 6 is not provided unlike the conventional art.

Further, the first elastic member 22 made of the PST having a tensile stress in the range from 196.2 to 588.6 $N/cm^2$ (20 to 60 $Kgf/cm^2$) at a 300 % tensile strain allows the second elastic member 23 to be closely brought into contact with the objects to be connected with each other by an appropriate clamping force. Thus, the connecting portion covering member 20 allowing the connecting portion to have a superior moisture proof characteristic, electrical insulating characteristic, and low-temperature characteristic can be provided.

As described above, according to the preferred embodiment of the present invention, the second elastic member made of the PST having a rubber hardness ranging from 10 to 20 degrees can be closely brought into contact with the outer surfaces of objects to be connected with each other even though outer surfaces of the materials are irregular. Thus, the connecting portion covering member 20 allowing the connecting portion to have a superior moisture proof characteristic, electrical insulating characteristic, and low-temperature characteristic can be provided.

Further, according to the preferred embodiment, the first elastic member made of the PST having a tensile stress in the range from 196.2 to 588.6 $N/cm^2$ (20 to 60 $Kgf/cm^2$) at a 300 % tensile strain allows the second elastic member to be closely brought into contact with the objects to be connected with each other by an appropriate clamping force. Thus, the connecting portion covering member allowing the connecting portion to have a superior moisture proof characteristic, electrical insulating characteristic, and low-temperature characteristic can be provided.

## Claims

1. A connecting portion covering member suitable for fitting and use under low temperature, which comprises:

   - an annular member made of elastomer, and
   - a core member (24) holding the annular member in a state in which the annular member is expanded in a radial direction thereof, for inserting objects to be connected with each other, into the core member (24) and for disposing the annular member on a connecting portion of the objects to be connected with each other, thereby covering the connecting portion of the objects by the annular member upon removing the core member (24) from the annular member,
   - wherein the annular member comprises a second elastic member (23) disposed along an outer surface of the core member (24) and a first elastic member (22) disposed along an outer surface of the second elastic member (23) and that of the core member (24)

   **characterized in that**

   - the second elastic member (23) is formed of silicone rubber having a rubber hardness in a range of 10 to 20 degrees according to JIS (Japanese Industrial Standard) A-standard and

- the first member is formed of silicone rubber having a tensile stress in a range of 196.2 to 588.6 N/cm$^2$ (20 to 60 Kgf/cm$^2$) at a 300 % tensile strain.

2. Connecting portion covering member as claimed in claim 1, characterized in that the second elastic member (23) has a thickness ranging from 1 mm to 10 mm.

3. Connecting portion covering member as claimed in claim 1 or 2, characterized in that the second elastic member (23) is provided at both ends of the connecting portion covering member in an axial direction thereof.

4. Connecting portion covering member as claimed in any one of claims 1 to 3, characterized in that the objects to be connected with each other consist of electric wires, an outer surface of which have convexes and concaves formed along an axial direction of the electric wires.

**Patentansprüche**

1. Umhüllungsteil für einen Verbindungsbereich, das zum Anbringen und Gebrauch bei niedrigen Temperaturen geeignet ist, mit:

   - einem aus einem Elastomer gebildeten Ringteil, und

   - einem Kernteil (24), das das Ringteil in einem Zustand hält, in dem das Ringteil in radialer Richtung gedehnt ist, um miteinander zu verbindende Objekte in das Kernteil (24) einzuführen und das Ringteil auf einem Verbindungsbereich der miteinander zu verbindenden Objekte anzuordnen und dadurch den Verbindungsbereich der Objekte mit dem Ringteil beim Entfernen des Kernteils (24) aus dem Ringteil abzudecken,

   - wobei das Ringteil ein entlang der Außenfläche des Kernteils (24) angeordnetes zweites elastisches Teil (23) und ein erstes elastisches Teil (22) aufweist, das entlang der Außenfläche des zweiten elastischen Teils (23) und derjenigen des Kernteils (24) angeordnet ist,

   dadurch gekennzeichnet, daß

   - das zweite elastische Teil (23) aus Silikongummi mit einer Gummihärte im Bereich von 10 bis 20 Grad gemäß JIS (Japanese Industrial Standard) A-Standard aufweist, und

   - das erste Teil aus Siliziumgummi mit einer Zugspannung im Bereich von 196,2 bis 588,6 N/cm$^2$ (20 bis 60 Kgf/cm$^2$) bei einer Zugbelastung von 300% besteht.

2. Verbindungsbereichsabdeckungsteil nach Anspruch 1, dadurch gekennzeichnet, daß das zweite elastische Teil (23) eine Dicke zwischen 1 mm und 10mm hat.

3. Verbindungsbereichsabdeckungsteil nach Anspruch 1 oder 2, dadurch gekennzeichnet, daß das zweite elastische Teil (23) in axialer Richtung an beiden Enden des Verbindungsbereichsabdeckungsteils angeordnet ist.

4. Verbindungsbereichsabdeckungsteil nach einem der Ansprüche 1 bis 3, dadurch gekennzeichnet, daß die miteinander zu verbindenden Objekte elektrische Kabel sind, deren Außenfläche mit konvexen und konkaven Ausformungen entlang der axialen Richtung der elektrischen Kabel versehen sind.

**Revendications**

1. Une enveloppe pour connexion, apte à s'ajuster et à être utilisée à basse température, qui comprend:

   - un organe annulaire en élastomère, et
   - un organe de noyau (24) qui tient l'organe annulaire dans un état dans lequel l'organe annulaire est mis en expansion dans une direction radiale de ce dernier afin d'insérer, dans l'organe de noyau (24), des objets à connecter entre eux et de disposer l'organe annulaire sur une connexion des objets à connecter entre eux, en enveloppant ainsi la connexion des objets par l'organe annulaire lorsque l'organe de noyau (24) est enlevé de l'organe annulaire,

- dans lequel l'organe annulaire comprend un deuxième organe élastique (23) disposé le long d'une surface extérieure de l'organe de noyau (24) et un premier organe élastique (22) disposé le long d'une surface extérieure du deuxième organe élastique (23) et de celle de l'organe de noyau (24),

  caractérisée en ce que

- le deuxième organe élastique (23) est formé d'un caoutchouc de silicone à dureté de caoutchouc comprise dans une plage de 10 à 20 degrés selon la norme A de l'industrie japonaise (JIS), et
- le premier organe est formé d'un caoutchouc de silicone à contrainte de traction comprise dans la plage de 196,2 à 588,6 N/cm$^2$ (20 à 60 kgf/cm$^2$) pour une déformation de traction de 300%.

2. Enveloppe pour connexion selon la revendication 1, caractérisée en ce que l'épaisseur du deuxième organe élastique (23) est comprise dans une plage de 1 mm à 10 mm.

3. Enveloppe pour connexion selon la revendication 1 ou 2, caractérisée en ce que le deuxième organe élastique (23) est agencé aux deux extrémités de l'enveloppe pour connexion, dans une direction axiale de celle-ci.

4. Enveloppe pour connexion selon l'une quelconque des revendications 1 à 3, caractérisée en ce que les objets à connecter entre eux consistent en fils électriques, sur une surface extérieure desquels des éléments convexes et concaves sont formés selon une direction axiale des fils électriques.

Fig.1

24

22

23

24a

20

24b

Fig.2A

20

22

23

Fig.2B

22

23

*Fig. 3*

22
23
24

Fig.5A

4

Fig.4

1
3
2

Fig.5B

4
5

18

EP 0 678 959 B1

**Fig. 6 A**

**Fig. 6 B**

**Fig. 7 A**

**Fig. 7 B**

Fig.9A

9

6

2

Fig.9B

9

6

Fig.8A

9

2

Fig.8B

9

5